# EUROPÄISCHE PATENTANMELDUNG

(11) **EP 4 852 258 A1**
(43) Veröffentlichungstag der Anmeldung: **09.12.2026**
(21) Anmeldenummer: 25181315.0
(22) Anmeldetag: 06.06.2025
(51) Int. Cl.: H02J 1/10, H02J 3/00, H02J 3/12, H02J 3/18, H02J 3/46, H02J 13/00

(54) **AUTOMATISCHE PARAMETRIERUNG EINES NETZREGLERS UND REGELUNG EINES ENERGIENETZES**

(71) Anmelder: Siemens Aktiengesellschaft, 80333 München (DE)
(72) Erfinder: Allmeta, Albi, 80798 München (DE); Duckheim, Mathias, 91052 Erlangen (DE); Mora Gil, Edwin Camilo, 63741 Aschaffenburg (DE); Schubert, Jano, 91301 Forchheim (DE)
(74) Vertreter: Siemens Patent Attorneys

(57) **Zusammenfassung**

Zur automatischen Parametrierung eines Netzreglers (12) zur Regelung eines Energienetzes (1), welches eine Vielzahl von Netzknoten (2a, 2b, 2c, 2d, 3a) aufweist, wobei wenigstens ein Teil der Vielzahl von Netzknoten (2a, 2b, 2c, 2d, 3a) regelbare Netzknoten (2a, 2b, 2c, 2d) sind, wird basierend auf historischen Messdaten der Vielzahl von Netzknoten (2a, 2b, 2c, 2d, 3a) eine Netzsensitivität des Energienetzes (1) geschätzt. Für wenigstens einen Reglerparameter des Netzreglers (12) wird basierend auf der Netzsensitivität jeweils ein initialer Wert berechnet. Der jeweilige initiale Wert für den wenigstens einen Reglerparameter wird dem Netzregler (12) zur initialen Regelung des Energienetzes (1) bereitgestellt.

## Beschreibung

Die vorliegende Erfindung betrifft ein computerimplementiertes Verfahren zur automatischen Parametrierung eines Netzreglers zur Regelung eines Energienetzes, wobei das Energienetz eine Vielzahl von Netzknoten aufweist und mindestens ein Teil der Vielzahl von Netzknoten regelbare Netzknoten sind. Die Erfindung richtet sich auch auf ein entsprechendes Datenverarbeitungssystem, ein Verfahren zur Regelung eines Energienetzes, ein entsprechendes Regelungssystem und ein entsprechendes Computerprogrammprodukt.

Energienetze, insbesondere Niederspannungsverteilnetze, werden aufgrund der Integration verteilter Energieressourcen wie Photovoltaikanlagen, Ladestationen für Elektrofahrzeuge, Batteriespeicher und Wärmepumpen zunehmend komplexer. Diese Netze stehen vor Herausforderungen bei der Aufrechterhaltung der Spannungsstabilität und Stromqualität bei gleichzeitiger Berücksichtigung bidirektionaler Leistungsflüsse. Netzbetreiber müssen diese Netze aktiv verwalten, um einen zuverlässigen Betrieb und eine effiziente Nutzung der Ressourcen zu gewährleisten.

Bei der Regelung von Niederspannungsverteilnetzen stellen sich mehrere Herausforderungen. Die große Anzahl von Knoten und die begrenzte Echtzeitüberwachung machen es schwierig, den Netzzustand genau zu bestimmen. Darüber hinaus sind die Netztopologie und die elektrischen Parameter oft nicht oder nicht genau bekannt, was die Regelung weiter erschwert. Traditionelle Regelungsansätze, die auf detaillierten Netzmodellen oder umfangreichen Echtzeitmessungen beruhen, sind in Niederspannungsnetzen oft nicht praktikabel und/oder sehr aufwändig in der Umsetzung.

Bestehende Methoden zur Regelung von Niederspannungsnetzen umfassen lokale Regelungsstrategien, wie die Volt/Var-Regelung, und zentralisierte Optimierungsansätze wie die Optimierung des Leistungsflusses. Lokale Regelungsstrategien können jedoch zu einem suboptimalen Netzbetrieb führen, während die zentralisierte Optimierung typischerweise genaue Netzmodelle und eine vollständige Beobachtbarkeit des Netzzustands erfordert. Keiner der beiden Ansätze eignet sich gut für die praktischen Einschränkungen vieler Niederspannungsverteilnetze.

Jüngere Untersuchungen haben datengetriebene und modellfreie Regelungstechniken untersucht, die darauf abzielen, diese Einschränkungen zu überwinden. Diese Ansätze versuchen, verfügbare Messungen zu nutzen und das Netzverhalten zu erlernen, ohne sich auf detaillierte physikalische Modelle zu verlassen. Es bleiben jedoch Herausforderungen bei der Entwicklung robuster, adaptiver Regelungsstrategien, die mit begrenzten Echtzeitinformationen und unsicheren Netzparametern effektiv arbeiten können.

In der Veröffentlichung L. Ortmann et al.: "Experimental validation of feedback optimization in power distribution grids", Electr. Power Syst. Res., vol. 189, 2020 wird der Ansatz des Online-Feedback-Optimierungs-Reglers, auch als OFO-Regler bezeichnet, in Verteilnetzen beschrieben.

In der Veröffentlichung J. Zhang et al.: "Locally Weighted Ridge Regression for Power System Online Sensitivity Identification Considering Data Collinearity', IEEE Trans. Power Syst., vol. 33, no. 2, pp. 1624-1634, Mar. 2018 wird unter anderem das Tikhonov-Philips-Regularisierung-Prinzip beschrieben.

In der Veröffentlichung N. S. Wadia et al.: "Optimization with Adaptive Step Size Selection from a Dynamical Systems Perspective', OPT2021: 13th Annual Workshop on Optimization for Machine Learning, 2021 wird die Optimierung dynamischer Systeme unter Verwendung adaptiver Schrittweiten beschrieben.

In manuellen Ansätzen werden Reglerparameter des Netzreglers im laufenden Real-Betrieb eingestellt. Dabei kann nicht zuverlässig gewährleistet werden, dass die initial gewählten Parameter zu einem zulässigen Netzzustand führen. Es besteht insbesondere die Gefahr von Oszillationen oder einem zu langsamen Regelverhalten. Zusätzlich entsteht ein hoher manueller Aufwand.

Es ist ein Ziel der vorliegenden Erfindung, ein verbessertes Konzept zur Regelung von Energienetzen bereitzustellen, bei dem Reglerparameter des Netzreglers zuverlässig automatisch initialisiert werden können.

Dieses Ziel wird durch den jeweiligen Gegenstand der unabhängigen Ansprüche erreicht. Weitere Ausführungsformen und bevorzugte Ausführungsformen sind Gegenstand der abhängigen Ansprüche.

Die Erfindung basiert auf der Idee, einen Netzregler zur Regelung eines Energienetzes automatisch zu parametrisieren, indem historische Messdaten verwendet werden, um die Netzsensitivität zu schätzen und initiale Werte für einen oder mehrere Reglerparameter zu berechnen, was einen effizienten und zuverlässigen Betrieb ohne detailliertes Netzmodell ermöglicht.

Gemäß einem Aspekt der Erfindung wird ein computerimplementiertes Verfahren zur automatischen Parametrierung eines Netzreglers zur Regelung eines Energienetzes, insbesondere eines Niederspannungsverteilnetzes, bereitgestellt. Das Energienetz weist eine Vielzahl von Netzknoten auf, wobei mindestens ein Teil der Vielzahl von Netzknoten regelbare Netzknoten sind. Das Verfahren umfasst das Schätzen einer Netzsensitivität des Energienetzes, insbesondere der Vielzahl von Netzknoten, basierend auf historischen Messdaten der Vielzahl von Netzknoten, insbesondere aller Netzknoten der Vielzahl von Netzknoten, und das Berechnen eines initialen Werts für mindestens einen Reglerparameter des Netzreglers basierend auf der Netzsensitivität. Der jeweilige initiale Wert für den mindestens einen Reglerparameter wird dem Netzregler zur initialen Regelung des Energienetzes bereitgestellt, insbesondere an diesen übermittelt.

Sofern nicht anders angegeben, können alle Schritte des computerimplementierten Verfahrens von einem Datenverarbeitungssystem durchgeführt werden, welches wenigstens ein Datenverarbeitungsgerät aufweist. Insbesondere ist das wenigstens eine Datenverarbeitungsgerät zur Durchführung der Schritte des computerimplementierten Verfahrens konfiguriert oder angepasst. Hierzu kann das wenigstens eine Datenverarbeitungsgerät beispielsweise ein Computerprogramm speichern, das Befehle beinhaltet, die bei Ausführung durch das wenigstens eine Datenverarbeitungsgerät das wenigstens eine Datenverarbeitungsgerät dazu veranlassen, das computerimplementierte Verfahren auszuführen. Die Begriffe "Datenverarbeitungssystem" und "wenigstens ein Datenverarbeitungsgerät" können austauschbar verwendet werden.

Für den Fall, dass das wenigstens eine Datenverarbeitungsgerät zwei oder mehr Datenverarbeitungsgeräte beinhaltet, können bestimmte Schritte, die mittels des wenigstens einen Datenverarbeitungsgeräts durchgeführt werden, zum Beispiel so verstanden werden, dass verschiedene Datenverarbeitungsgeräte verschiedene Schritte oder verschiedene Teile eines Schrittes durchführen. Insbesondere ist es nicht erforderlich, dass jedes Datenverarbeitungsgerät die Schritte vollständig durchführt. Mit anderen Worten kann die Durchführung der Schritte auf die zwei oder mehr Datenverarbeitungsgeräte verteilt sein.

Aus jeder Ausführungsform des computerimplementierten Verfahrens ergibt sich eine entsprechende Ausführungsform eines Verfahrens zur automatischen Parametrierung eines Netzreglers, das nicht rein computerimplementiert ist, indem entsprechende Schritte zur Messung der historischen Messdaten einbezogen werden.

Das Energienetz kann aus der Vielzahl von Netzknoten bestehen. Das Energienetz kann jedoch neben der Vielzahl von Netzknoten auch weitere Netzknoten aufweisen, von denen beispielsweise nicht notwendigerweise historische Messdaten verfügbar oder bereitstellbar oder erfassbar sind.

Die Bereitstellung des jeweiligen initialen Werts für den wenigstens einen Reglerparameter kann direkt erfolgen, beispielsweise durch drahtlose oder drahtgebundene Übermittlung an den Netzregler, oder indirekt, beispielsweise durch Speicherung auf ein Speichermedium.

Der Netzregler ist insbesondere dazu eingerichtet, das Energienetz, insbesondere die regelbaren Netzknoten zu regeln, indem er Regelgrößen der regelbaren Netzknoten gemäß den Führungsgrößen beeinflusst, sodass das jeweilige Regelziel erreicht oder möglichst erreicht wird. Es ist auch möglich, dass ein regelbarer Netzknoten über einen lokalen Regler verfügt, der von dem Netzregler die entsprechende Führungsgröße erhält und basierend darauf die jeweilige Regelgröße beeinflusst. Die Regelgrößen können beispielsweise Wirk- und/oder Blindleistungen sein, die von den einzelnen Netzknoten in das Netzwerk eingespeist oder aus dem Netzwerk entnommen werden, oder Spannungen, die an den Netzknoten jeweils anliegen, insbesondere Spannungsbeträge.

Beispiele für Netzknoten in einem Energienetz umfassen beispielsweise Komponenten und Anschlusspunkte wie Anschlusspunkte für Photovoltaikanlagen, Ladestationen für Elektrofahrzeuge, Anschlusspunkte von Windkraftanlagen, Batteriespeichersysteme, industrielle Verbraucher, Wärmepumpen, Blockheizkraftwerke, Transformatoren oder Transformatorstationen und so weiter.

Beispiele für mögliche Messdaten eines Netzknotens sind die Spannung, insbesondere der Effektivwert der Spannung am Netzknoten, der Strom durch den Netzknoten, die von dem Netzknoten aufgenommene oder eingespeiste Wirkleistung oder Blindleistung, ein Leistungsfaktor des Netzknotens, also das Verhältnis von Wirkleistung zu Scheinleistung, die Netzfrequenz am Netzknoten, Amplituden und/oder Phasenwinkel von Spannungs- und/oder Stromoberschwingungen an dem Netzknoten und so weiter.

Die historischen Messdaten können insbesondere in Abgrenzung zu Echtzeitmessdaten verstanden werden. Sie beziehen sich also insbesondere auf vergangene Zeitpunkte oder Zeiträume und repräsentieren bereits dementsprechend Zustände in der Vergangenheit. Wie weit in der Vergangenheit die Zeitpunkte oder Zeiträume liegen, zu denen die historischen Messdaten erfasst wurde, kann unterschiedlich sein. Es kann sich um einige Minuten, Stunden, Tage, Wochen oder mehr handeln. Insbesondere können Messdaten von Smart Metern als historische Messdaten aufgefasst werden, da diese typischerweise eine zeitliche Auflösung von 15 Minuten aufweisen.

Die historischen Messdaten können insbesondere von lokalen Messgeräten der jeweiligen Netzknoten erfasst worden sein. Die historischen Messdaten können beispielsweise aus einem ungeregelten Betrieb des Energienetzes oder aus einem mit vorbestimmten Standardwerten für den mindestens einen Reglerparameter geregelten Betrieb stammen. Dies ermöglicht die Anwendung des Verfahrens sowohl auf bestehende Netze ohne vorherige Regelungssysteme oder mit konventionell vorparametrierten Regelungssystemen.

Die Netzsensitivität, auch als Netzempfindlichkeit bezeichnet, beschreibt insbesondere, wie sich Änderungen an einem Netzknoten der Vielzahl Netzknoten auf andere Netzknoten der Vielzahl Netzknoten auswirken. Sie quantifiziert beispielsweise die Beziehung zwischen Leistungsänderungen an einem Netzknoten und resultierenden Spannungsänderungen an anderen Knoten im Netz, insbesondere auch zu unterschiedlichen Zeitpunkten. Die Netzsensitivität kann durch eine Netzsensitivitätsmatrix dargestellt werden, wobei jeder Eintrag die Spannungsänderung an einem Knoten in Bezug auf eine Leistungsänderung an einem anderen Knoten (nicht-diagonale Einträge) oder demselben Knoten (Diagonaleinträge) repräsentiert.

Beispiele für Reglerparameter des Netzreglers können verschiedene Aspekte der Netzsteuerung umfassen wie etwa eine Regelungsschrittweite, welche insbesondere bestimmt, wie stark der Netzreglers bei jeder Iteration Stellgrößen anpasst, Zeitkonstanten, die beispielsweis eine Reaktionsgeschwindigkeit des Reglers bestimmen, Aktualisierungsintervalle und so weiter.

Das erfindungsgemäße computerimplementierte Verfahren ermöglicht die automatische Parametrierung des Netzreglers ohne ein detailliertes Netzmodell oder manuelle Abstimmung, was die Zeit und Kosten für die Inbetriebnahme eines Niederspannungsverteilnetzreglers erheblich reduziert. Durch die Nutzung historischer Messdaten kann das Verfahren Netzcharakteristiken schätzen und geeignete initiale Werte für den oder die Reglerparameter bestimmen, wodurch ein zuverlässiger Netzbetrieb von Beginn der Inbetriebnahme an gewährleistet wird.

Gemäß mindestens einer Ausführungsform ist das Energienetz ein Niederspannungsverteilnetz.

Niederspannungsverteilnetze arbeiten typischerweise mit Spannungen unter 1000 V und stellen beispielsweise die letzte Stufe bei der Stromlieferung an Endverbraucher dar. Diese Netze stehen vor zunehmenden Herausforderungen aufgrund der Integration verteilter Energieressourcen, DER (englisch: distributed energy resources), wie Photovoltaikanlagen, Ladestationen für Elektrofahrzeuge, Wärmepumpen, Batteriespeicher und so weiter.

Gemäß mindestens einer Ausführungsform wird zur Schätzung der Netzsensitivität basierend auf den historischen Messdaten eine Netzsensitivitätsmatrix geschätzt. Der jeweilige initiale Wert für den wenigstens einen Reglerparameter des Netzreglers wird basierend auf der Netzsensitivitätsmatrix berechnet.

Insbesondere entspricht jeder Eintrag der Netzsensitivitätsmatrix einer Spannungsänderung eines Netzknotens der Vielzahl von Netzknoten in Bezug auf eine Leistungsänderung des jeweiligen Netzknotens oder eines anderen Netzknotens der Vielzahl von Netzknoten. Insbesondere entspricht jeder Diagonaleintrag der Netzsensitivitätsmatrix einer Spannungsänderung eines Netzknotens der Vielzahl von Netzknoten in Bezug auf eine Leistungsänderung des jeweiligen Netzknotens für denselben Zeitschritt. Insbesondere entspricht jeder Nicht-Diagonaleintrag der Netzsensitivitätsmatrix einer Spannungsänderung eines Netzknotens der Vielzahl von Netzknoten in Bezug auf eine Leistungsänderung eines anderen Netzknotens der Vielzahl von Netzknoten, insbesondere zum selben Zeitschritt oder zu unterschiedlichen Zeitschritten, oder in Bezug auf eine Leistungsänderung desselben Netzknotens der Vielzahl von Netzknoten zu unterschiedlichen Zeitschritten.

Eine Leistungsänderung kann hier und im Folgenden eine Wirkleistungsänderung und/oder eine Blindleistungsänderung sein oder beinhalten, sofern nichts anderes erwähnt ist.

Die Netzsensitivitätsmatrix bietet eine umfassende Darstellung davon, wie sich Leistungsänderungen an verschiedenen Knoten auf die Spannungspegel im Netz auswirken. Diese Information ist von hoher Relevanz für das Verständnis des Netzverhaltens und die Entwicklung effektiver Regelungsstrategien. Diagonaleinträge der Matrix repräsentieren die Empfindlichkeit der Spannung eines Knotens gegenüber seinen eigenen Leistungsänderungen zum selben Zeitschritt, während Nicht-Diagonaleinträge die Empfindlichkeit gegenüber Leistungsänderungen an anderen Knoten oder seinen eigenen Leistungsänderungen zu anderen Zeitschritten darstellen.

Gemäß mindestens einer Ausführungsform wird basierend auf der Netzsensitivität eine Reglersensitivität bestimmt und der jeweilige initiale Wert für den wenigstens einen Reglerparameter wird basierend auf der Reglersensitivität berechnet.

Die Reglersensitivität beschreibt insbesondere, wie stark sich Leistungsänderungen an den regelbaren Netzknoten auf die Spannungen im Energienetz auswirken. Sie stellt insbesondere eine Teilmenge der Netzsensitivität, insbesondere der Einträge der Netzsensitivitätsmatrix, dar, die sich speziell auf die vom Netzwerkregler regelbaren Netzknoten bezieht.

Die Reglersensitivität kann beispielsweise als Reglersensitivitätsmatrix dargestellt werden, wobei die Einträge der Reglersensitivitätsmatrix denjenigen Einträgen der Netzsensitivitätsmatrix entsprechen, denen regelbare Netzknoten zugeordnet werden können.

Die Bestimmung der Reglersensitivität ermöglicht es dem Verfahren, sich auf die spezifischen Netzcharakteristiken zu konzentrieren, die für die regelbaren Knoten relevant sind, und ermöglicht so gezieltere und effizientere Regelungsstrategien.

Gemäß mindestens einer Ausführungsform wird zur Bestimmung der Reglersensitivität eine Reglersensitivitätsmatrix bestimmt, deren Einträge durch diejenigen Einträge der Netzsensitivitätsmatrix gegeben sind, die einer Spannungsänderung in Bezug auf eine Leistungsänderung eines der regelbaren Netzknoten der Vielzahl von Netzknoten entsprechen. Der jeweilige initiale Wert für den wenigstens einen Reglerparameter wird insbesondere basierend auf der Reglersensitivitätsmatrix berechnet.

Die Reglersensitivitätsmatrix bietet eine fokussierte Darstellung davon, wie sich Leistungsänderungen an regelbaren Knoten auf die Spannungspegel im gesamten Netz auswirken. Diese Information ist besonders wertvoll für die Entwicklung von Regelungsstrategien, die Spannungspegel effektiv mit den verfügbaren regelbaren Ressourcen verwalten.

Gemäß mindestens einer Ausführungsform umfasst der mindestens eine Reglerparameter des Netzreglers eine Regelungsschrittweite.

Die Regelungsschrittweite kann ein wichtiger Parameter sein, der beispielsweise bestimmt, wie stark der Regler die Leistungspegel an regelbaren Knoten als Reaktion auf Spannungsabweichungen anpasst. Eine angemessene Schrittgröße trägt zu einer stabilen und effizienten Regelung bei, ohne Oszillationen oder ein Überschreiten der Zielspannungspegel zu verursachen.

Gemäß mindestens einer Ausführungsform wird basierend auf der Netzsensitivität, insbesondere basierend auf der Reglersensitivität beziehungsweise der Reglersensitivitätsmatrix, und insbesondere basierend auf vordefinierten Systembeschränkungswerten ein oberer Grenzwert für die Regelungsschrittweite als initialer Wert für die Regelungsschrittweite berechnet.

Die Berechnung eines oberen Grenzwerts für die Regelungsschrittweite basierend auf der Netzsensitivität Systembeschränkungswerten stellt sicher, dass die initialen Regelungsaktionen ausreichend reaktionsschnell sind, während sie innerhalb sicherer Betriebsgrenzen bleiben. Dadurch können potenzielle Instabilitäten oder Verletzungen von Netzgrenzen während der initialen Regelungsphase vermieden werden.

Die Systembeschränkungswerte können beispielsweise maximal zulässige Spannungsabweichungen, maximale oder minimale Leistungsflüsse und/oder Stabilitätsgrenzen des Energienetzes beinhalten und/oder vordefinierte Regeleingriffsgrenzen.

Der obere Grenzwert für die Regelungsschrittweite kann beispielweise einem maximalen Wert für die Regelungsschrittweite entsprechen, bei dem die Systembeschränkungswerte noch eingehalten werden können.

Gemäß mindestens einer Ausführungsform enthalten die historischen Messdaten für wenigstens eine Messgröße jeweils eine Zeitreihe von Messwerten, die einer Vielzahl von historischen Messzeitpunkten entsprechen. Für jede der Zeitreihen wird für jedes Paar gemäß der jeweiligen Zeitreihe aufeinanderfolgender historischer Messzeitpunkte der Vielzahl von historischen Messzeitpunkten eine Differenz der Messwerte der jeweiligen Messgröße berechnet. Die Netzsensitivität wird basierend auf den berechneten Differenzen geschätzt.

Dieser Ansatz zur Schätzung der Netzsensitivität nutzt die zeitlichen Informationen in den historischen Daten, um zu erfassen, wie das Netz auf Änderungen im Laufe der Zeit reagiert. Durch die Analyse der Unterschiede zwischen aufeinanderfolgenden Messungen kann das Verfahren die Empfindlichkeit des Energienetzes gegenüber verschiedenen Leistungsänderungen zuverlässig ableiten, auch wenn kein detailliertes Netzmodell vorliegt.

Die Differenzen können beispielsweise dargestellt werden als $Δ S = \left[Δ{p}_{1}⋯Δ{p}_{t}⋯Δ{p}_{T} Δ{q}_{1}⋯Δ{q}_{t}⋯Δ{q}_{T}\right]$ $ΔV = \left[Δ{V}_{1}⋯Δ{V}_{t}⋯Δ{V}_{T}\right]$ wobei gilt $Δ {p}_{t} = {p}_{t} - {p}_{t - 1}$ $Δ {q}_{t} = {q}_{t} - {q}_{t - 1}$ $Δ {V}_{t} = {V}_{t} - {V}_{t - 1} .$

Der Index t gibt dabei die entsprechenden historischen Messzeitpunkte an und läuft von 0 bis T, sodass die Anzahl der historischen Messzeitpunkte gleich *T +* 1 ist. Dabei sind *Vₜ , pₜ* und *qₜ* Vektoren für die Spannungen, Wirkleistungen und Blindleistungen, wobei jeder Eintrag einem der Netzknoten entspricht. Die Netzsensitivitätsmatrix $\frac{\partial V}{\partial S}$ ist insbesondere gegeben durch den Zusammenhang $Δ V = \frac{\partial V}{\partial S} Δ S .$

Gemäß mindestens einer Ausführungsform umfasst die mindestens eine Messgröße eine Wirkleistung und/oder eine Blindleistung des jeweiligen Netzknotens.

Wirk- und Blindleistungsmessungen liefern besonders relevante Informationen über den Leistungsfluss im Energienetz.

Gemäß mindestens einer Ausführungsform ist der Netzregler ein Online-Feedback-Optimierungs-Netzregler, also ein OFO-Regler.

Ein OFO-Netzregler passt seine Regelungsaktionen kontinuierlich beispielsweise basierend auf Echtzeitmessungen und Rückmeldungen aus dem Energienetz an. Diese Art von Regler eignet sich gut für die Bewältigung der dynamischen und unsicheren Bedingungen, die typisch für moderne Verteilnetze mit vielen DER sind.

Gemäß mindestens einer Ausführungsform wird basierend auf dem jeweiligen initialen Wert und basierend auf weiteren Messdaten der Vielzahl von Netzknoten, die aus einem initial geregelten Betrieb des Energienetzes basierend auf dem jeweiligen initialen Wert für den mindestens einen Reglerparameter resultieren, ein jeweiliger aktualisierter Wert für den mindestens einen Reglerparameter bestimmt und dem Netzregler zur weiteren Regelung des Energienetzes bereitgestellt.

Dieser adaptive Ansatz ermöglicht es dem Regler, seine Parameter basierend auf tatsächlichen Betriebsdaten zu verfeinern und seine Leistung im Laufe der Zeit zu verbessern. Durch die kontinuierliche Aktualisierung der Reglerparameter kann sich das System an Änderungen der Netzbedingungen, Lastmuster oder die Hinzufügung neuer verteilter Energieressourcen anpassen.

Die weiteren Messdaten können beispielsweise Messdaten aus Echtzeitmessungen und/oder weitere historische Messdaten aus dem initial geregelten Betrieb des Energienetzes beinhalten. Der initial geregelte Betrieb des Energienetzes ist insbesondere ein Betrieb, bei dem das Energienetz basierend auf dem jeweiligen initialen Wert für den wenigstens einen Reglerparameter geregelt wird, was auch als initiale Regelung bezeichnet werden kann.

Aus jeder solchen ergibt sich eine entsprechende Ausführungsform des Verfahrens zur automatischen Parametrierung eines Netzreglers, das nicht rein computerimplementiert ist, indem entsprechende Schritte zur Messung der weiteren Messdaten einbezogen werden.

Gemäß einem weiteren Aspekt der Erfindung wird ein Verfahren zur Regelung, insbesondere zur automatischen oder autonomen Regelung, eines Energienetzes bereitgestellt. Das Verfahren umfasst die Durchführung eines erfindungsgemäßen computerimplementierten Verfahrens zur automatischen Parametrierung eines Netzreglers. Nachdem der jeweilige initiale Wert für den mindestens einen Reglerparameter dem Netzregler bereitgestellt wurde, wird das Energienetz, werden insbesondere die regelbaren Netzknoten, wird insbesondere eine jeweilige Regelgröße der regelbaren Netzknoten, mittels des Netzreglers basierend auf dem jeweiligen initialen Wert für den mindestens einen Reglerparameter initial geregelt.

Gemäß mindestens einer Ausführungsform wird, nachdem der jeweilige aktualisierte Wert für den mindestens einen Reglerparameter dem Netzregler bereitgestellt wurde, das Energienetz, insbesondere die regelbaren Netzknoten oder die jeweilige Regelgröße der regelbaren Netzknoten, mittels des Netzreglers basierend auf dem jeweiligen aktualisierten Wert für den mindestens einen Reglerparameter weiter geregelt.

Gemäß mindestens einer Ausführungsform hängt die Regelgröße für die initiale Regelung und die weitere Regelung von einer jeweiligen Wirkleistung der regelbaren Netzknoten der Vielzahl von Netzknoten ab oder entspricht der Wirkleistung.

Die Regelung der Wirkleistung ist besonders relevant für die Verwaltung des gesamten Leistungsgleichgewichts im Energienetz und kann zur Behebung von Problemen wie Spannungsverletzungen oder thermischen Überlastungen eingesetzt werden. Eine Führungsgröße für die Regelgröße kann ein Sollwert, ein Maximalwert oder ein zulässiger Wertebereich für die Wirkleistung an jedem regelbaren Knoten sein.

Gemäß mindestens einer Ausführungsform hängt die Regelgröße für die initiale Regelung und die weitere Regelung von einer jeweiligen Blindleistung der regelbaren Netzknoten der Vielzahl von Netzknoten ab oder entspricht der Blindleistung.

Die Regelung der Blindleistung ist besonders relevant für die Spannungsregelung in Verteilnetzen. Durch Anpassung der Blindleistungsabgabe regelbarer Netzknoten kann der Regler die Spannungspegel im gesamten Netz effektiv verwalten. Eine Führungsgröße für die Regelgröße kann ein Sollwert, ein Maximalwert oder ein zulässiger Wertebereich für die Blindleistung an jedem regelbaren Knoten sein.

Gemäß mindestens einer Ausführungsform hängt die Regelgröße für die initiale Regelung und die weitere Regelung von einer jeweiligen Spannung der regelbaren Netzknoten der Vielzahl von Netzknoten ab oder entspricht der Spannung.

Die direkte Spannungsregelung an regelbaren Netzknoten kann eine effektive Strategie zur Aufrechterhaltung der Spannungspegel innerhalb akzeptabler Grenzen im gesamten Netz sein. Eine Führungsgröße für die Regelgröße kann ein Sollwert, ein Minimalwert, ein Maximalwert oder ein zulässiger Wertebereich für die Spannung an jedem regelbaren Knoten sein.

Gemäß einem weiteren Aspekt der Erfindung wird ein Datenverarbeitungssystem bereitgestellt, das dazu eingerichtet ist, das oben beschriebene computerimplementierte Verfahren zur automatischen Parametrierung eines Netzreglers durchzuführen.

Die Begriffe "Datenverarbeitungssystem" und "wenigstens ein Datenverarbeitungsgerät" können im Rahmen der vorliegenden Offenbarung austauschbar verwendet werden. In der vorliegenden Offenbarung kann ein Datenverarbeitungsgerät zum Beispiel als ein Gerät mit Verarbeitungsschaltkreisen zur Verarbeitung von Daten verstanden werden. Ein Datenverarbeitungsgerät kann also Rechenoperationen durchführen, um Daten zu verarbeiten. Ein indizierter Zugriff auf eine Datenstruktur, zum Beispiel eine Look-Up-Tabelle, LUT, oder eine Datenbank, kann ebenfalls als Rechenoperation betrachtet werden. Auch eine teilweise oder vollständig in Hardware implementierte Verarbeitung von Daten kann als Rechenoperation betrachtet werden.

Ein Datenverarbeitungsgerät kann insbesondere einen oder mehrere Computer, einen oder mehrere Mikrocontroller und/oder einen oder mehrere integrierte Schaltkreise umfassen, beispielsweise einen oder mehrere anwendungsspezifische integrierte Schaltkreise, ASIC, ein oder mehrere feldprogrammierbare Gate-Arrays, FPGA, und/oder ein oder mehrere Einchipsysteme, SoC. Ein Datenverarbeitungsgerät kann auch einen oder mehrere Prozessoren enthalten, zum Beispiel einen oder mehrere Mikroprozessoren, eine oder mehrere Zentralprozessoreinheiten, CPU, eine oder mehrere Grafikprozessoreinheiten, GPU, und/oder einen oder mehrere Signalprozessoren, insbesondere einen oder mehrere digitale Signalprozessoren, DSP. Das Datenverarbeitungsgerät kann auch einen physischen oder virtuellen Cluster von Computern oder anderen der genannten Geräte umfassen.

Ein Datenverarbeitungsgerät kann auch eine oder mehrere Hardware- und/oder Softwareschnittstellen umfassen, zum Beispiel für den Empfang und/oder die Bereitstellung von Daten.

Ein Datenverarbeitungsgerät kann auch eine oder mehrere Speichervorrichtungen umfassen. Dabei kann eine Speichervorrichtung als flüchtiger Speicher, beispielsweise als dynamischer Direktzugriffsspeicher, DRAM, oder statischer Direktzugriffsspeicher, SRAM, oder als nichtflüchtiger Datenspeicher, beispielsweise als Nur-Lese-Speicher (ROM), ein programmierbarer Nur-Lese-Speicher, PROM, implementiert sein, als löschbarer programmierbarer Festwertspeicher, EPROM, als elektrisch löschbarer programmierbarer Festwertspeicher, EEPROM, als Flash-Speicher oder als Flash-EEPROM, als ferroelektrischer Direktzugriffsspeicher, FRAM, als magnetoresistiver Direktzugriffsspeicher, MRAM, oder als Phasenwechsel-Direktzugriffsspeicher, PCRAM.

Gemäß einem weiteren Aspekt der Erfindung wird ein Regelungssystem zur automatischen, beispielsweise autonomen, Regelung eines Energienetzes bereitgestellt. Das Regelungssystem umfasst ein erfindungsgemäßes Datenverarbeitungssystem und den Netzregler.

Der Netzregler kann auch ganz oder teilweise von dem Datenverarbeitungssystem umfasst sein.

Gemäß einem weiteren Aspekt der Erfindung wird ein Computerprogramm bereitgestellt, das Befehle umfasst, die, wenn sie von einem Datenverarbeitungssystem ausgeführt werden, das Datenverarbeitungssystem veranlassen, ein erfindungsgemäßes computerimplementiertes Verfahren zur automatischen Parametrierung eines Netzreglers durchzuführen.

Die Befehle können beispielsweise als Programmcode vorliegen. Der Programmcode kann beispielsweise als Binärcode oder Assembler und/oder als Quellcode einer Programmiersprache, zum Beispiel C, und/oder als Programmskript, zum Beispiel Python, bereitgestellt sein.

Gemäß einem weiteren Aspekt der Erfindung wird ein computerlesbares Speichermedium angegeben, insbesondere ein physisches und/oder nicht-flüchtiges computerlesbares Speichermedium, das ein erfindungsgemäßes Computerprogramm speichert.

Das Computerprogramm und das computerlesbare Speichermedium sind jeweils Computerprogrammprodukte mit den Befehlen.

Weitere Merkmale der Erfindung ergeben sich aus den Ansprüchen, den Figuren und der Figurenbeschreibung. Die oben in der Beschreibung erwähnten Merkmale und Merkmalskombinationen sowie die nachfolgend in der Beschreibung der Figuren erwähnten und/oder in den Figuren gezeigten Merkmale und Merkmalskombinationen können nicht nur in der jeweils angegebenen Kombination, sondern auch in anderen Kombinationen von der Erfindung umfasst sein. Insbesondere können auch Ausführungsformen und Merkmalskombinationen, die nicht alle Merkmale eines ursprünglich formulierten Anspruchs aufweisen, von der Erfindung umfasst sein. Darüber hinaus können auch Ausführungsformen und Merkmalskombinationen, die über die in den Ansprüchen aufgeführten Merkmalskombinationen hinausgehen oder von diesen abweichen, von der Erfindung umfasst sein.

Im Folgenden wird die Erfindung anhand spezifischer beispielhafter Implementierungen und entsprechender schematischer Zeichnungen im Detail erläutert. In den Zeichnungen können identische oder funktional identische Elemente mit den gleichen Bezugszeichen bezeichnet werden. Die Beschreibung identischer oder funktional identischer Elemente wird nicht notwendigerweise in Bezug auf verschiedene Figuren wiederholt.

In den Figuren zeigen
- FIG 1: ein Blockdiagramm eines Energienetz und einer beispielhaften Ausführungsform eines Regelungssystems gemäß der Erfindung;
- FIG 2: ein Blockdiagramm einer beispielhaften Ausführungsform eines computerimplementierten Verfahrens zur automatischen Parametrierung eines Netzreglers gemäß der Erfindung; und
- FIG 3: ein Blockdiagramm einer weiteren beispielhaften Ausführungsform eines computerimplementierten Verfahrens zur automatischen Parametrierung eines Netzreglers gemäß der Erfindung.

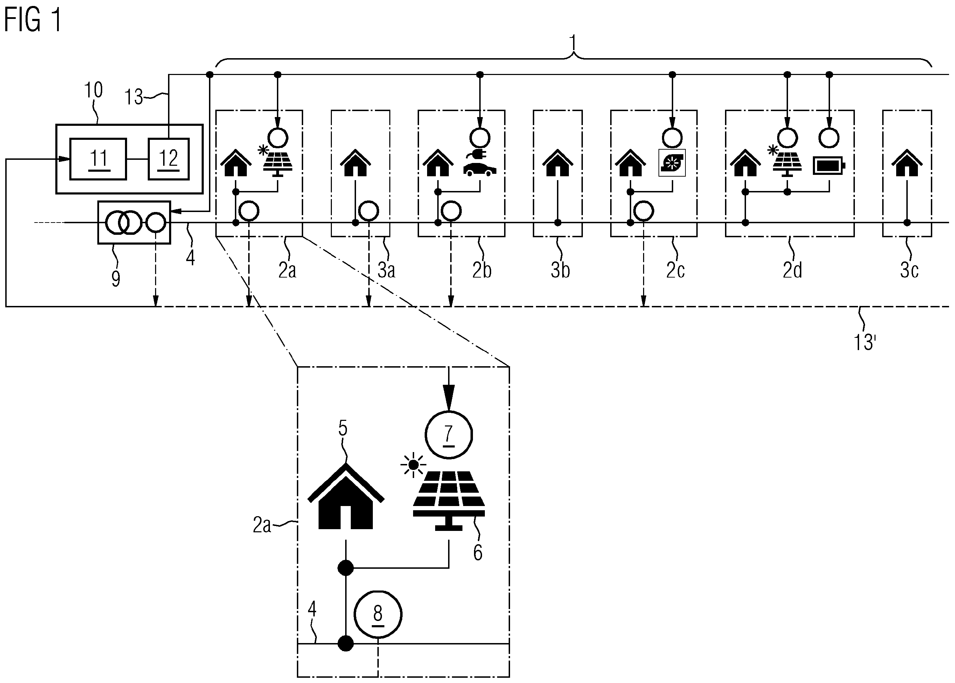

FIG 1 zeigt eine schematische Darstellung eines Energienetzes 1 und einer beispielhaften Implementierung eines Regelungssystems 10 gemäß der Erfindung.

Das Energienetz 1 beinhaltet eine Vielzahl von Netzknoten 2a, 2b, 2c, 2d, 3a, 3b, 3c, 9. Die Vielzahl von Netzknoten 2a, 2b, 2c, 2d, 3a, 3b, 3c, 9 umfasst regelbare Netzknoten 2a, 2b, 2c, 2d und optional nicht regelbare Netzknoten 3a, 3b, 3c. Die Netzknoten 2a, 2b, 2c, 2d, 3a, 3b, 3c, 9 sind durch Stromleitungen 4 miteinander verbunden.

In einem Detailausschnitt ist der Netzknoten 2a genauer dargestellt. Der Netzknoten 2a weist beispielsweise einen Gebäudeanschluss mit einem Gebäude 5 auf. Der Netzknoten 2a, beispielsweise das Gebäude 5, weist eine auf Photovoltaikanlage 6 auf, die eine verteilte Energieressource innerhalb des Energienetz 1 darstellt. Durch Beeinflussung von einer oder mehrerer Regelgrößen 7 des Netzknotens 2a ist insbesondere die durch die Photovoltaikanlage 6 in das Energienetz 1 eingespeiste elektrische Leistung regelbar. Insbesondere ist auch die Leistung regelbar, die durch die Photovoltaikanlage 6 an andere Verbraucher des Netzknotens 2a beziehungsweise des Gebäudes 5 bereitgestellt wird, regelbar, so dass letztlich auch die von dem Netzknoten 2a aus dem Energienetz 1 entnommene Leistung geregelt werden kann.

Die Regelung ist dabei insbesondere durch die theoretisch maximal durch die Photovoltaikanlage 6 erzeugbare Leistung und die aktuellen Wetterbedingungen begrenzt. Die Leistungsabgabe und -aufnahme kann durch ein lokales Messgerät 8, beispielsweise ein Smart Meter, gemessen werden. Die regelbaren Netzknoten 2a, 2b, 2c, 2d sind allgemein mit lokalen Messgeräten 8, insbesondere Smart Metern, ausgestattet und es sind jeweilige Regelgrößen 7 regelbar. Diese Komponenten ermöglichen die Überwachung und Regelung der jeweiligen Netzknoten 2a, 2b, 2c, 2d.

Andere regelbare Netzknoten 2a, 2b, 2c, 2d können beispielsweise statt der Photovoltaikanlage 6 oder zusätzlich dazu Anschlusspunkte für Elektrofahrzeuge, wie schematisch für Netzknoten 2b gezeigt, Wärmepumpen, wie schematisch für Netzknoten 2c gezeigt, und/oder Batteriespeicher, wie schematisch für Netzknoten 2d gezeigt, aufweisen. Die nicht regelbaren Netzknoten 3a, 3b, 3c weisen keine entsprechenden Regelgrößen 7 auf. Sie können dennoch lokale Messgeräte 8 aufweisen wie für den Netzknoten 3a gezeigt oder nicht wie für die Netzknoten 3b, 3c dargestellt.

Beispielsweise ist eine Transformatorstation 9 mit einem Transformator über die Stromleitungen 4 mit den Netzknoten 2a, 2b, 2c, 2d, 3a, 3b, 3c, 9 verbunden und ermöglicht die Stromverteilung und Spannungstransformation. Die Transformatorstation 9 kann ebenfalls ein lokales Messgerät 8 aufweisen, mit dem insbesondere Echtzeitmessungen durchgeführt werden und/oder historische Messdaten bereitgestellt werden können. Die Transformatorstation 9 kann ebenfalls als Netzknoten angesehen werden, insbesondere als regelbarer Netzknoten.

Das Regelungssystem 10 ist zur automatischen und autonomen Regelung des Energienetzes 1 über Kommunikationsverbindungen 13 mit den regelbaren Netzknoten 2a, 2b, 2c, 2d verbunden. Die Kommunikationsverbindungen 13 verbinden das Regelungssystem 10 mit den regelbaren Netzknoten 2a, 2b, 2c, 2d und ermöglichen den Datenaustausch und die Übertragung von Regelsignalen. Wenn die Transformatorstation 9 ebenfalls ein regelbarer Netzknoten ist, ist die Transformatorstation 9 beispielsweise ebenfalls über die Kommunikationsverbindungen 13 mit dem Regelungssystem 10 verbunden.

Das Regelungssystem 10 umfasst ein Datenverarbeitungssystem 11 und einen Netzregler 12. Des Weiteren ist das Regelungssystem 10 über weitere Kommunikationsverbindungen 13' mit den lokalen Messgeräten 8 und beispielsweise mit dem Messgerät der Transformatorstation verbunden. Das Regelungssystem 10 ist insbesondere zur Verwaltung und Optimierung des Betriebs des Energienetzes 1 verantwortlich.

Das Regelungssystem 10 weist beispielsweise ein Datenverarbeitungssystem 11 und einen Netzregler 12 auf. Der Netzregler 12 nutzt insbesondere Daten von den lokalen Messgeräten 8 und anderen Systemkomponenten, um Entscheidungen zu treffen und Regelsignale an die regelbaren Netzknoten 2a, 2b, 2c, 2d zu senden. Dies ermöglicht ein adaptives Management des Energieflusses innerhalb des Energienetzes 1.

Das Datenverarbeitungssystem 11 ist dazu eingerichtet, ein erfindungsgemäßes computerimplementiertes Verfahren zur automatischen Parametrierung des Netzreglers 12 durchzuführen.

Insbesondere kann das Energienetz 1 ein Niederspannungsverteilnetz sein. Niederspannungsverteilnetze arbeiten typischerweise mit Spannungen unter 1000 Volt und verteilen Elektrizität beispielsweise an Endverbraucher wie Privathaushalte und vergleichsweise kleine Gewerbekunden.

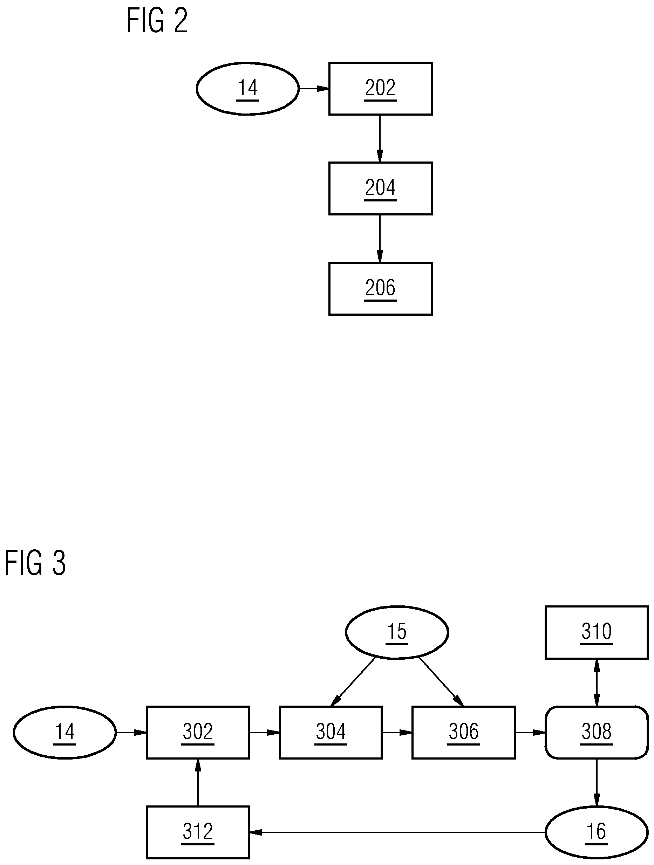

Das Verfahren nutzt historische Messdaten 14 (siehe FIG 2) aus dem Energienetz 1, um die Netzsensitivität zu schätzen und initiale Werte für mindestens einen Reglerparameter des Netzreglers 12 zu berechnen. Diese historischen Messdaten 14 können aus verschiedenen Betriebszuständen des Energienetzes 1 stammen. In einem Beispiel stammen die historischen Messdaten 14 aus einem ungeregelten Betrieb des Energienetzes 1. Ungeregelter Betrieb bezieht sich insbesondere auf einen Betrieb, in dem das Energienetz 1 ohne aktiven Eingriff des Netzreglers 12 arbeitet. Dies liefert Basisdaten über das Verhalten und die Eigenschaften des Energienetzes 1. In einem anderen Beispiel können die historischen Messdaten 14 aus einem Betrieb stammen, in dem mit vordefinierten Standardwerten für den mindestens einen Reglerparameter geregelt wird. Dieses Szenario liefert Daten darüber, wie das Energienetz 1 auf grundlegende Regelungseingriffe mit generischen Parametereinstellungen reagiert. Diese Informationen bilden die Grundlage für die Schätzung der Netzsensitivität und die Berechnung optimierter initialer Werte für den oder die Reglerparameter.

Der Betrieb des Datenverarbeitungssystems 11 bei der Durchführung des computerimplementierten Verfahrens wird mit Bezug auf FIG 2 näher beschrieben.

FIG 2 zeigt ein Ablaufdiagramm einer beispielhaften Ausführungsform eines computerimplementierten Verfahrens zur automatischen Parametrierung eines Netzreglers 12 zur Regelung eines Energienetzes 1.

Ein Verfahrensschritt 202 umfasst das Schätzen einer Netzsensitivität des Energienetzes 1 basierend auf den historischen Messdaten 14 der Vielzahl von Netzknoten 2a, 2b, 2c, 2d, 3a, 3b, 3c, 9, sofern diese über lokale Messgeräte 8 verfügen. Die historischen Messdaten 14 können Zeitreihen von Messwerten für mindestens eine Messgröße enthalten, wie zum Beispiel Wirkleistung und Blindleistung der jeweiligen Netzknoten. Ein Verfahrensschritt 204 umfasst das Berechnen eines initialen Werts für den mindestens einen Reglerparameter basierend auf der Netzsensitivität.

Ein Verfahrensschritt 206 umfasst das Bereitstellen des initialen Werts für den mindestens einen Reglerparameter an den Netzregler 12 zur initialen Regelung des Energienetzes 1. Das Verfahren kann weiterhin das initiale Regeln des Energienetzes 1 mittels des Netzreglers 12 basierend auf dem initialen Wert für den mindestens einen Reglerparameter umfassen.

In einem bezüglich FIG 3 beschriebenen exemplarischen Fall beinhalten die historischen Messdaten 14 eine Zeitreihe für die Wirkleistungen *pₜ* der Netzknoten 2a, 2b, 2c, 2d, 3a mit lokalen Messgeräten 8, sowie eine Zeitreihe für die Blindleistungen *qₜ* der Netzknoten 2a, 2b, 2c, 2d, 3a mit lokalen Messgeräten 8 und eine Zeitreihe für die Spannungsbeträge *Vₜ* der Netzknoten 2a, 2b, 2c, 2d, 3a mit lokalen Messgeräten 8. Der Index t gibt dabei die entsprechenden historischen Messzeitpunkte an und läuft dabei von 0 bis T, sodass die Anzahl der historischen Messzeitpunkte gleich *T +* 1 ist. Dabei sind *Vₜ , pₜ* und *qₜ* Vektoren, wobei jeder Eintrag einem der Netzknoten 2a, 2b, 2c, 2d, 3a mit lokalen Messgeräten 8 entspricht.

Zur Schätzung der Netzsensitivität in Schritt 302 können beispielsweise für jede der Zeitreihen der historischen Messdaten 14 Differenzen der Messwerte für jedes Paar aufeinanderfolgender historischer Messzeitpunkte berechnet werden. Die berechneten Differenzen können dann dargestellt werden als $Δ S = \left[Δ{p}_{1}⋯Δ{p}_{t}⋯Δ{p}_{T} Δ{q}_{1}⋯Δ{q}_{t}⋯Δ{q}_{T}\right]$ $ΔV = \left[Δ{V}_{1}⋯Δ{V}_{t}⋯Δ{V}_{T}\right]$ wobei gilt $Δ {p}_{t} = {p}_{t} - {p}_{t - 1}$ $Δ {q}_{t} = {q}_{t} - {q}_{t - 1}$ $Δ {p}_{t} = {V}_{t} - {V}_{t - 1} .$

Dabei sollte die Anzahl der historischen Messzeitpunkte vorzugsweise so groß sein, dass diverse Lastsituationen abgebildet werden. Dafür kann idealerweise ein Sampling aus einer Jahreszeitreihe erfolgen oder es sollten zumindest mehrere Tageszeitreihen ausgewertet werden. Je größer der zu betrachtende Netzbereich, desto größer sollte die Anzahl der Zeitschritte T sein.

Basierend auf diesen berechneten Differenzen kann die Netzsensitivitätsmatrix geschätzt werden, welche die Netzsensitivität darstellt. Jeder Eintrag der Netzsensitivitätsmatrix entspricht einer Spannungsänderung eines Netzknotens 2a, 2b, 2c, 2d, 3a in Bezug auf eine Leistungsänderung des jeweiligen Netzknotens 2a, 2b, 2c, 2d, 3a oder eines anderen Netzknotens 2a, 2b, 2c, 2d, 3a.

Die Netzsensitivitätsmatrix $\frac{\partial V}{\partial S}$ kann beispielsweise mittels einer Least-Squares-Schätzung ermittelt werden, indem das lineare Modell $Δ V = \frac{\partial V}{\partial S} Δ S$ mittels *(ΔS,* Δ*V*) approximiert wird. Um Stabilitätsprobleme durch mögliche Multikollinearitäten in *ΔS,* welche beispielsweise durch eine gleichförmige Photovoltaik-Einspeisung auftreten können, zu verhindern, kann beispielsweise das Tikhonov-Philips-Regularisierung-Prinzip eingesetzt, sodass sich die Lösung für die Netzsensitivitätsmatrix gemäß Least-Squares-Schätzung wie folgt ergibt: $\frac{\partial V}{\partial S} = {\left(Δ{S}^{T}ΔS+βI\right)}^{- 1} Δ {S}^{T} Δ V .$

Dabei sind β > 0 ein vorgegebener Regularisierungsfaktor und *I* die Identitätsmatrix. Im Falle eines OFO-Reglers wird die Netzsensitivitätsmatrix insbesondere in eine Reglersensitivitätsmatrix H überführt. Dazu werden die Einträge von $\frac{\partial V}{\partial S}$ extrahiert, welche den regelbaren Netzknoten 2a, 2b, 2c, 2d zugeordnet werden können. Je größer die Anzahl an zusätzlichen historisch gemessenen Knoten, desto genauer kann die Netzsensitivitätsmatrix geschätzt werden.

Unter Verwendung der geschätzten Reglersensitivitätsmatrix und Systembeschränkungswerten 15 berechnet das Verfahren in Schritt 304 einen initialen Wert für die Regelungsschrittweite α, die in diesem Fall dem Reglerparameter entspricht.

Beispielsweise kann von einem linearisieren System ausgegangen werden, in dem der Zusammenhang zwischen Systemeingängen und der Systemantwort *yₜ = h*(*uₜ*, *wₜ*) wie folgt darstellbar ist: ${y}_{t} = H {u}_{t} + F {w}_{t}$

Dabei beschreibt *uₜ* die Regelgröße und F beschreibt die Sensitivität der Störgröße *wₜ*. Durch Umformulierung erhält man für die Aktualisierung des Lagrange-Multiplikators *λₜ* der OFO-Regelung folgende Formel: ${λ}_{t + 1} = \left(I-αΠ\right) {λ}_{t} + α \left(AF{w}_{t}-b\right)$

Dabei ist Π *= AHM*⁻¹*H^{T} A^{T}.* Matrix A und Vektor b ergeben sich aus der linearisierten Form der Systembeschränkungen 15, die als Bedingung ***A** · h*(***u, w***) ≤ b formuliert werden können. Asymptotische Stabilität für die Trajektorie des Lagrange-Multiplikators wird für die nachfolgende Schrittweite α gewährleistet: $0 < α \leq \frac{2}{{κ}^{max}}$

Dabei ist *κ*^{max} der maximale Eigenwert von Π. Der berechnete obere Grenzwert $\frac{2}{{κ}^{max}}$ der Schrittweite α kann also als initialer Wert für die Schrittweite α des Netzreglers 12 eingesetzt werden, um den Netzregler 12 in Schritt 306 zu parametrieren. In Schritt 308 wird dann das Energienetz 1 autonom initial geregelt.

Durch die Variabilität an unterschiedlichen Lastsituationen im Energienetz 1 und um auf neue Systemparameter, wie beispielsweise den Zubau von DERs, zu reagieren, kann eine automatische Parameter-Adaption während des Betriebs in Schritt 310 durchgeführt werden.

Dabei wird die Systemreaktion ausgewertet und dazu verwendet die Reglerparameter anzupassen. Im Fall der OFO kann eine adaptive Änderung der Schrittweite *α* vorgenommen werden, beispielsweise basierend auf einer adaptierten Regelung wie in der eingangs genannten Veröffentlichung von Wadia et al. beschrieben. Es sei angemerkt, dass auch andere Reglerparameter entsprechend initialisiert und angepasst werden können.

Zunächst wird beispielsweise jedem Zeitschritt eine Heun'sche Näherung (Mittelpunktsregel) des Lagrange-Multiplikators berechnet: ${λ}_{t + 1}^{H} = {λ}_{t} - \frac{1}{2} α \left(g\left({y}_{t}\right)+g\left({y}_{t + 1}\right)\right)$

Dabei ist *g*(·) der Gradient des Lagrange-Multiplikators, welcher sich aus *Ayₜ* - b ergibt.

Anschließend wird die Euklidische Norm zwischen dem geschätzten Lagrange-Multiplikators ${λ}_{t + 1}^{H}$ und dem berechneten Lagrange-Multiplikators *λ*_{*t*+1} ermittelt: ${δ}_{t} = \left‖{λ}_{t + 1}^{H}-{λ}_{t + 1}\right‖$

Zuletzt wird die Schrittweite für den nachfolgenden Zeitschritt aktualisiert: ${α}_{t + 1} = {\left(\frac{r}{{δ}_{t}}\right)}^{\frac{γ}{2}} ⋅ {α}_{t}$

Dabei sind r > 0 und *γ* > 0 zwei Hyperparameter des Algorithmus zur adaptiven Schrittweitenanpassung. Dabei beschreibt r den Sollwert für den Diskretisierungsfehler. Für den Sonderfall *γ* = 0 erfolgt keine Schrittweitenanpassung. Für weitere Details zum Hyperparameter-Tuning wird an dieser Stelle auf Wadia et al. verwiesen.

Außerdem sei angemerkt, dass zur Anpassung der Reglerparameter, in dem vorliegenden Fall der Anpassung der Schrittweite, auch andere Verfahren eingesetzt werden können. Beispielsweise kann zur Adaption der Reglerschrittweite die Adaptive Moment Estimation (ADAM) eingesetzt werden.

Sofern sich Änderungen im betrachteten Netzgebiet ergeben, zum Beispiel Topologieänderungen, Zubau von erneuerbaren Energieanlagen, Hinzukommen regelbarer Anlagen, und so weiter, kann eine erneute Parameterinitialisierung in Schritt 312 erfolgen. Alternativ kann die erneute Parameterinitialisierung in definierten Zeitintervallen, beispielsweise einmal pro Monat, alle sechs Monate, einmal im Jahr oder dergleichen, erfolgen.

Dabei wird das zuvor beschriebene Verfahren, beginnend mit Schritt 302 von der Parameterschätzung auf Basis weiterer historischer Messdaten 16 wiederholt, wobei in diesem Fall die weiteren historischen Messdaten 16 die Änderungen im Netzgebiet abbilden und insbesondere Daten aus dem geregelten Netzbetrieb enthalten können.

Ein Vorteil der autonomen Parametrierung liegt darin, dass Zeit und damit Kosten für die Inbetriebnahme des Netzreglers 12 deutlich reduziert werden können, indem auf eine aufwändige Parametrierung mittels eines Simulators, der oftmals ohnehin nicht verfügbar ist, oder durch manuelles Parameter-Tuning während des Betriebs verzichtet werden kann. Somit kann die Inbetriebnahme wesentlich verkürzt, der manuelle Aufwand kann reduziert werden und gleichzeitig können die Performance optimiert beziehungsweise ein ungewünschtes Regelverhalten vermieden werden. Dies reduziert den Installationsaufwand deutlich. Dabei kann insbesondere ein zuverlässiger Netzbetrieb ab dem Moment der Inbetriebnahme erreicht werden. Zusätzlich sei nochmals hervorgehoben, dass kein elektrisches Netzmodell nötig ist und die Bestimmung einer funktionsfähigen Reglerparametrierung für die Inbetriebnahme auf den historischen Messdaten basiert.

Unabhängig vom grammatikalischen Geschlecht eines bestimmten Begriffes sind Personen mit männlicher, weiblicher oder anderer Geschlechteridentität mit umfasst.

### Bezugszeichenliste

- 1: Energienetz
- 2a: regelbarer Netzknoten
- 2b: regelbarer Netzknoten
- 2c: regelbarer Netzknoten
- 2d: regelbarer Netzknoten
- 3a: Netzknoten
- 3b: Netzknoten
- 3c: Netzknoten
- 4: Stromleitungen
- 5: Gebäude
- 6: Photovoltaikanlage
- 7: Regelgrößen
- 8: lokale Messgeräte
- 9: Transformatorstation
- 10: Regelungssystem
- 11: Datenverarbeitungssystem
- 12: Netzregler
- 13: Kommunikationsverbindungen
- 13': Kommunikationsverbindungen
- 14: historische Messdaten
- 15: Systembeschränkungswerte
- 16: historische Messdaten
- 202: Verfahrensschritt
- 204: Verfahrensschritt
- 206: Verfahrensschritt
- 302: Verfahrensschritt
- 304: Verfahrensschritt
- 306: Verfahrensschritt
- 308: Verfahrensschritt
- 310: Verfahrensschritt
- 312: Verfahrensschritt

## Patentansprüche

1. Computerimplementiertes Verfahren zur automatischen Parametrierung eines Netzreglers (12) zur Regelung eines Energienetzes (1), welches eine Vielzahl von Netzknoten (2a, 2b, 2c, 2d, 3a) aufweist, wobei wenigstens ein Teil der Vielzahl von Netzknoten (2a, 2b, 2c, 2d, 3a) regelbare Netzknoten (2a, 2b, 2c, 2d) sind, und wobei
- basierend auf historischen Messdaten der Vielzahl von Netzknoten (2a, 2b, 2c, 2d, 3a) eine Netzsensitivität des Energienetzes (1) geschätzt wird;
- für wenigstens einen Reglerparameter des Netzreglers (12) basierend auf der Netzsensitivität jeweils ein initialer Wert berechnet wird; und
- der jeweilige initiale Wert für den wenigstens einen Reglerparameter dem Netzregler (12) zur initialen Regelung des Energienetzes (1) bereitgestellt wird.

2. Computerimplementiertes Verfahren gemäß Anspruch 1, wobei zum Schätzen der Netzsensitivität basierend auf den historischen Messdaten eine Netzsensitivitätsmatrix geschätzt wird, wobei jeder Eintrag der Netzsensitivitätsmatrix einer Spannungsveränderung eines Netzknotens (2a, 2b, 2c, 2d, 3a) der Vielzahl von Netzknoten (2a, 2b, 2c, 2d, 3a) bezüglich einer Leistungsveränderung des jeweiligen Netzknotens (2a, 2b, 2c, 2d, 3a) oder eines weiteren Netzknotens (2a, 2b, 2c, 2d, 3a) der Vielzahl von Netzknoten (2a, 2b, 2c, 2d, 3a) entspricht.

3. Computerimplementiertes Verfahren gemäß einem der vorhergehenden Ansprüche, wobei basierend auf der Netzsensitivität eine Reglersensitivität bestimmt wird und der jeweilige initiale Wert für den wenigstens einen Reglerparameter basierend auf der Reglersensitivität berechnet wird.

4. Computerimplementiertes Verfahren gemäß Anspruch 2 und Anspruch 3, wobei zum Bestimmen der Reglersensitivität eine Reglersensitivitätsmatrix bestimmt wird, deren Einträge durch diejenigen Einträgen der Netzsensitivitätsmatrix gegeben sind, die einer Spannungsveränderung bezüglich einer Leistungsveränderung eines der regelbaren Netzknotens (2a, 2b, 2c, 2d) der Vielzahl von Netzknoten (2a, 2b, 2c, 2d, 3a) entspricht.

5. Computerimplementiertes Verfahren gemäß einem der vorhergehenden Ansprüche, wobei der wenigstens eine Reglerparameter des Netzreglers (12) eine Regelungsschrittweite beinhaltet.

6. Computerimplementiertes Verfahren gemäß Anspruch 5, wobei basierend auf der Netzsensitivität und vorgegebenen Systembeschränkungswerten ein oberer Grenzwert für die Regelungsschrittweite als initialer Wert für die Regelungsschrittweite berechnet wird.

7. Computerimplementiertes Verfahren gemäß einem der vorhergehenden Ansprüche, wobei
- die historischen Messdaten für wenigstens eine Messgröße jeweils eine Zeitreihe von Messwerten entsprechend einer Vielzahl von historischen Messzeitpunkten enthalten;
- für jede der Zeitreihen für jedes Paar gemäß der jeweiligen Zeitreihe aufeinanderfolgender historischer Messzeitpunkte eine Differenz der Messwerte der jeweiligen Messgröße berechnet wird; und
- die Netzsensitivität basierend auf den berechneten Differenzen geschätzt wird.

8. Computerimplementiertes Verfahren gemäß Anspruch 7, wobei die wenigstens eine Messgröße eine Wirkleistung und/oder eine Blindleistung des jeweiligen Netzknotens (2a, 2b, 2c, 2d, 3a) beinhaltet.

9. Computerimplementiertes Verfahren gemäß einem der vorhergehenden Ansprüche, wobei es sich bei dem Netzregler (12) um einen Online-Feedback-Optimierungs-Netzregler (12) handelt.

10. Computerimplementiertes Verfahren gemäß einem der vorhergehenden Ansprüche, wobei basierend auf dem jeweiligen initialen Wert und basierend auf weiteren Messdaten der Vielzahl von Netzknoten (2a, 2b, 2c, 2d, 3a), welche aus einem basierend auf dem jeweiligen initialen Wert für den wenigstens einen Reglerparameter initial geregelten Betrieb des Energienetzes (1) resultieren, ein jeweiliger aktualisierter Wert für den wenigstens einen Reglerparameter bestimmt und dem Netzregler (12) zur weiteren Regelung des Energienetzes (1) bereitgestellt wird.

11. Verfahren zur Regelung eines Energienetzes (1), wobei ein computerimplementiertes Verfahren nach einem der vorhergehenden Ansprüche durchgeführt wird und wobei das Energienetz (1) mittels des Netzreglers (12) basierend auf dem jeweiligen initialen Wert für den wenigstens einen Reglerparameter initial geregelt wird.

12. Verfahren nach Anspruch 11, wobei eine Regelgröße (7) für die initiale Regelung eine jeweilige Wirkleistung und/oder eine jeweilige Blindleistung und/oder eine jeweilige Spannung der regelbaren Netzknoten (2a, 2b, 2c, 2d) der Vielzahl von Netzknoten (2a, 2b, 2c, 2d, 3a) beinhaltet oder davon abhängt.

13. Datenverarbeitungssystem (11), das dazu eingerichtet ist, ein computerimplementiertes Verfahren gemäß einem der Ansprüche 1 bis 10 durchzuführen.

14. Regelungssystem (10) zur automatischen Regelung eines Energienetzes (1), aufweisend ein Datenverarbeitungssystem (11) nach Anspruch 13 und den Netzregler (12).

15. Computerprogrammprodukt aufweisend Befehle, die bei Ausführung durch ein Datenverarbeitungssystem (11) das Datenverarbeitungssystem (11) dazu veranlassen, ein computerimplementiertes Verfahren gemäß einem der Ansprüche 1 bis 10 durchzuführen.
